# EUROPÄISCHE PATENTANMELDUNG

(11) **EP 4 524 097 A1**
(43) Veröffentlichungstag der Anmeldung: **19.03.2025**
(21) Anmeldenummer: 23020430.7
(22) Anmeldetag: 15.09.2023
(51) Int. Cl.: C01B 3/04, B01D 53/04, B01D 53/047, B01D 53/22, C01C 1/02

(54) **VERFAHREN UND ANLAGE ZUR GEWINNUNG EINES WASSERSTOFF ENTHALTENDEN PRODUKTS UNTER VERWENDUNG VON AMMONIAK**

(71) Anmelder: Linde GmbH, 82049 Pullach (DE)
(72) Erfinder: Peschel, Andreas, 82049 Pullach (DE); Reinke, Michael, 82049 Pullach (DE)
(74) Vertreter: Fischer, Werner

(57) **Zusammenfassung**

Die Erfindung betrifft ein Verfahren und eine Anlage (100) zur Herstellung eines Wasserstoff enthaltenden Produkts (5) aus einem Wasser und/oder Öl enthaltender Ammoniakeinsatz (1), bei dem ein Ammoniakgas (2) in einem Ammoniakcracker (20) unter Wärmezufuhr und mit katalytischer Unterstützung zu einem Ammoniak sowie Wasserstoff und Stickstoff enthaltenden Spaltgas (4) umgesetzt wird, das das Wasserstoff enthaltende Produkt (5) bildet oder zu diesem aufbereitet wird. Kennzeichnend hierbei ist, dass aus dem Ammoniakeinsatz (1) Wasser und/oder Öl entfernt werden, um das dem Ammoniakcracker (20) zuzuführende Ammoniakgas (2) zu erhalten.

## Beschreibung

Die Erfindung betrifft ein Verfahren und eine Anlage zur Gewinnung eines Wasserstoff enthaltenden Produkts unter Verwendung von Ammoniak.

### Hintergrund der Erfindung

Ammoniak kann gemäß 2 NH₃ → N₂ + 3 H₂ katalytisch zu Stickstoff und Wasserstoff gespalten (gecrackt, reformiert) werden. Die Reaktion ist endotherm und wird durch niedrigen Druck und hohe Temperatur begünstigt. Um einen Wasserstoffverdichter zu vermeiden, sind dennoch höhere Drücke wünschenswert.

Aus dem bei der Ammoniakspaltung erhaltenen Spaltgas, das weitgehend aus Wasserstoff und Stickstoff sowie nicht umgesetztem Ammoniak besteht, kann ein Wasserstoff-Stickstoff-Gemisch (sog. Formiergas) oder reiner Wasserstoff als Produkt erzeugt werden. Auch eine weitere Nutzung des Wasserstoffs bzw. Wasserstoff-Stickstoff-Gemischs, beispielsweise in einer Gasturbine, die mit einem Generator gekoppelt ist, kann erfolgen. In allen Fällen, die jeweils Ausgestaltungen der Erfindung entsprechen, wird also Wasserstoff aus Ammoniak gewonnen. Die Gewinnung eines Wasserstoff enthaltenden Produkts in dem hier verstandenen Sinn schließt also die Gewinnung eines wasserstoffhaltigen Gasgemischs, weiterer Produkte wie Stickstoff und/oder eine anschließende Nutzung des Produkts nicht aus.

Unterschiedliche Verfahrenskonzepte und Reaktoren der gattungsgemäßen Art sind aus der Patent- und Nichtpatentliteratur bekannt. Als Beispiel sei hier D. Sima et al., Int. J. Hydrogen Energy 45 (2020) 9342-9352 angeführt.

Entsprechende Verfahrenskonzepte können eine Reaktionseinheit (auch als Ammoniakcracker bezeichnet) nach Art eines Reformierreaktors umfassen, der eine Druckwechseladsorption zur Wasserstoffreinigung zugeordnet ist. Beispielsweise sei in diesem Zusammenhang auf die EP 4 112 539 A1 und die EP 4 112 540 A1 verwiesen, deren Inhalte hier in vollem Umfang aufgenommen werden.

Ein Ammoniakcracker kann einen Feuerraum, in dem mit Katalysatormaterial gefüllte Reaktionsrohre angeordnet sind, sowie ein Abhitzesystem aufweisen. Der Feuerraum kann durch einen oder mehrere mit importiertem Brennstoff betriebene Brenner beheizt werden, die Energie für die endotherm ablaufende Spaltung des durch die Reaktionsrohre geführten Ammoniaks liefern.

In entsprechenden Konzepten wird der Wasserstoff mittels Druckwechseladsorption aus dem im Ammoniakcracker erhaltenen Spaltgas abgetrennt, wobei ein Restgas anfällt, das zur Unterfeuerung des Ammoniakcrackers verwendet wird. Zusätzliche Feuerungsleistung kann durch die Verbrennung von reinem Ammoniak bereitgestellt werden. Solche Konzepte eignen sich insbesondere für die Herstellung von Wasserstoff hoher Reinheit.

In Ammoniakcrackern können nickelbasierte Katalysatoren eingesetzt werden, die Spalttemperaturen von mehr als 800°C erfordern. Im Unterschied zu diesen, können Katalysatoren auf Eisenbasis energieeffizienter bereits bei etwa 600°C zur Ammoniakspaltung eingesetzt werden, weshalb sie einen energieeffizienteren Betrieb des Ammoniakcrackers ermöglichen und die Materialauswahl für bzw. die Auslegung des Reaktors erleichtern.

Die vorliegende Erfindung stellt sich die Aufgabe, entsprechende Verfahren und Anlagen zur Gewinnung eines Wasserstoff enthaltenden Produkts unter Verwendung von Ammoniak zu verbessern.

### Offenbarung der Erfindung

Vor diesem Hintergrund werden ein Verfahren und eine Anlage zur Gewinnung eines Wasserstoff enthaltenden Produkts mit den Merkmalen der unabhängigen Patentansprüche vorgeschlagen. Ausgestaltungen sind Gegenstand der abhängigen Patentansprüche und der nachfolgenden Beschreibung.

Vor der Erläuterung der Vorteile der vorliegenden Erfindung werden nachfolgend einige bei der Beschreibung der Erfindung verwendete Begriffe näher definiert.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen. Jedoch bewegen sich derartige Drücke und Temperaturen typischerweise in bestimmten Bereichen, die beispielsweise ± 1%, 5%, 10%, 20% oder 25% um einen Mittelwert liegen. Druckniveaus und Temperaturniveaus können in disjunkten Bereichen liegen oder in Bereichen, die einander überlappen. Dasselbe Druckniveau kann beispielsweise auch noch vorliegen, wenn es zu unvermeidlichen Druckverlusten kommt. Entsprechendes gilt für Temperaturniveaus. Bei den hier in bar angegebenen Druckniveaus handelt es sich um Absolutdrücke.

Die vorliegende Erfindung und ihre Ausgestaltungen lösen ein Problem, das beim Einsatz eisenbasierter Katalysatoren herkömmlicher Art zur Ammoniakspaltung auftreten kann. Dieses Problem besteht darin, dass diese Katalysatoren bei Anwesenheit von Wasser oder Öl leicht oxidieren und ihre Aktivität einbüßen. Katalysatoren auf Eisenbasis sind empfindlich gegenüber Sauerstoff enthaltenden Verbindungen (z. B. H₂O, CO₂ usw.), die zu einer schnelleren Zersetzung des Katalysators führen. Auch in handelsüblichem NH₃ ("wasserfreiem" Ammoniak), das normalerweise als Einsatzstoff für den Ammoniakspaltung dient, ist ein Rest an Wasser (0,2 bis 0,5 Gew.-%) und Öl (< 5 ppmw) enthalten. Um die Lebensdauer des Katalysators zu verlängern, müssen dies Bestandteile daher aus dem eingesetzten Ammoniak entfernt.

In der vorliegenden Erfindung werden dazu Wasser und/oder Öl, aus einem Ammoniakeinsatz, der dem Ammoniakcracker zugeführt werden soll, insbesondere durch Adsorption, entfernt. Dadurch können die Lebensdauer des eisenbasierten Katalysators, der aufgrund der niedrigeren Spalttemperatur gegenüber herkömmlichen nickelbasierten Katalysatoren energetische Vorteile aufweist, verlängert und Wartungssowie Instandhaltungskosten reduziert werden.

Das Verfahren lässt sich vorteilhafterweise dann einsetzten, wenn die Ammoniakspaltung auf einem erhöhten Druckniveau, insbesondere zwischen 20 bar und 60 bar, durchgeführt und der von Wasser und/oder Öl befreiten Ammoniakeinsatz vor seiner Einleitung in dem Ammoniakcracker nicht verdichtet zu werden braucht.

Es wird ein Verfahren zur Herstellung eines Wasserstoff enthaltenden Produkts aus einem Wasser und/oder Öl enthaltender Ammoniakeinsatz vorgeschlagen, bei dem Ammoniakgas in einem Ammoniakcracker mit katalytischer Unterstützung unter Wärmezufuhr und unter Erhalt eines nicht umgesetztes Ammoniak sowie Wasserstoff und Stickstoff enthaltenden Spaltgases, insbesondere durch einen eisenbasierten Katalysator, umgesetzt wird. Dabei werden zunächst aus einem Ammoniakeinsatz Wasser und/oder Öl entfernt, um ein dem Ammoniakcracker zuzuführendes Ammoniakgas zu erhalten.

In einer Ausführungsform werden Wasser und/oder Öl aus dem Ammoniakeinsatz durch Adsorption in einem Adsorber entfernt, wobei ein gegenüber dem Ammoniakeinsatz an Ammoniak angereichertes und an Wasser und/oder Öl abgereichertes Ammoniakgas und ein gegenüber dem Ammoniakeinsatz an Ammoniak abgereichertes und an Wasser und/oder Öl angereichertes Tailgas erhalten werden. Der Ammoniakeinsatz kann auf seinem Weg durch den Adsorber mehrere Adsorptionsschichten durchströmen, die unterschiedlichen Adsorptionsmaterialien aufweisen.

Vorzugsweise wird die Entfernung von Wasser und/Öl rein adsorptiv durch Druckwechsel-Adsorption in einem Druckwechsel-Adsorber und/oder durch Temperaturwechsel-Adsorption in einem Temperaturwechsel-Adsorber ausgeführt. Möglich ist es aber auch, Wasser und/oder Öl ausschließlich oder zusätzlich zu einer adsorptiven Entfernung über eine Membran aus dem Ammoniakeinsatz abzutrennen.

In einer anderen Ausführungsform wird ein flüssig vorliegender Ammoniakeinsatz mit Hilfe einer Pumpe unter Druck gesetzt, d.h. auf ein höheres Druckniveau gebracht, und anschließend in einer Vorbehandlungseinheit verdampft und überhitzt, ehe er der erfindungsgemäßen Abtrennung von Wasser und/oder Öl unterzogen wird.

Ein erfindungsgemäß zur Entfernung von Wasser und/oder Öl eingesetzter Druckwechsel-Adsorbers, der im normalen Betrieb bei einer Temperatur zwischen 5°C und 60°C betrieben wird, wird durch Druckabsenkung regeneriert. Zusätzlich kann auch ein Spülgas zur Regenerierung eingesetzt werden, das die Desorption der während der Adsorptionsphase bei einem Druck zwischen 20 und 60 bar adsorbierten Komponenten unterstützt. Bevorzugt wird der Druck bei der Regenerierung bis auf 4 bar oder 2,5 bar oder 1,5 bar abgesenkt.

Temperaturwechsel-Adsorber werden nicht durch Druckabsenkung, sondern ausschließlich durch Spülung mit einem warmen Regeneriergas regenerier. Bei dem Regeneriergas kann es sich um ein extern zugeführtes Gas, insbesondere Stickstoffgas, um einen Teil des durch die Ammoniakspaltung erhaltenen Spaltgases oder um einen Teil des Wasserstoff enthaltenden Produkts handeln, wobei das Regeneriergas insbesondere auf einem Temperaturniveau von mindestens 95°C oder mindestens 100°C oder mindestens 110°C und höchstens 250°C oder höchstens 275°C oder höchstens 300°C dem zu regenerierenden Absorber zugeführt wird.

In einer Ausführungsform wird das durch den Adsorber erzeugte Tailgas oder ein Teil davon zur Bereitstellung zumindest eines Anteils der dem Ammoniakcracker zuzuführenden Wärme verfeuert. Dadurch kann die Effizienz der gesamten Anlage gesteigert werden, da das ansonsten nicht weiter verwendete Tailgas genutzt wird.

Die ebenfalls vorgeschlagene Anlage zur Herstellung eines Wasserstoff enthaltenden Produkts ist dazu eingerichtet, das Verfahren gemäß einer der vorgestellten Verfahrensvarianten durchzuführen. Zu weiteren Merkmalen und Vorteilen einer solchen Anlage und ihrer Ausgestaltungen wird daher auf die obigen Erläuterungen betreffend das vorgeschlagene erfindungsgemäße Verfahrens und dessen Ausgestaltungen ausdrücklich verwiesen, da diese hierfür in gleicher Weise gelten.

### Kurze Beschreibung der Zeichnungen

Figur 1 zeigt das Blockdiagramm einer Anlage, die dazu eingerichtet ist, eine Ausführungsform des erfindungsgemäßen Verfahrens durchzuführen.
Figur 2 zeigt ein Blockdiagramm einer weiteren Anlage, die dazu eingerichtet ist, eine weitere Ausführungsform des Verfahrens durchzuführen, und
Figur 3 zeigt ein Blockdiagramm einer anderen Anlage, die dazu eingerichtet ist, eine weitere Ausführungsform des Verfahrens durchzuführen.

### Ausführungsformen der Erfindung

Die nachfolgenden Beschreibungen der Ausführungsformen haben den Zweck, den Leser beim Verständnis der beanspruchten und zuvor erläuterten Merkmale der Verfahren und Anlagen zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Erläuterungen, die sich auf Vorrichtungen, Apparate, Anordnungen, Systeme usw. gemäß Ausführungsformen der vorliegenden Erfindung beziehen, gelten auch für Verfahren, Prozesse, Methoden usw. gemäß den Ausführungsformen der vorliegenden Erfindung und umgekehrt. Gleiche, gleich wirkende, in ihrer Funktion einander entsprechende, baulich identische oder vergleichbar aufgebaute Elemente, Verfahrensschritte usw. können mit identischen Bezugszeichen angegeben sein.

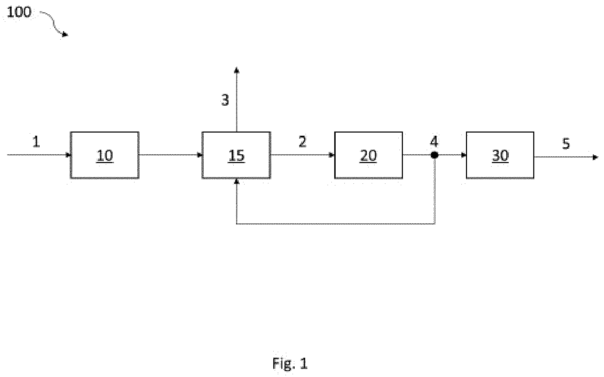

In Figur 1 ist eine Ausführungsform einer Anlage 100 gemäß der vorliegenden Erfindung veranschaulicht.

In der hier veranschaulichten Ausgestaltung wird ein flüssiger, Wasser und/oder Öl enthaltender Ammoniakeinsatz 1, beispielsweise aus einem Tank, falls erforderlich mittels einer Pumpe (nicht gezeigt) unter Druck gesetzt, d.h. auf ein höheres Druckniveau gebracht, und in einer Vorbehandlungseinheit 10 verdampft und überhitzt. Der verdampfte und überhitzte Ammoniakeinsatz 1 wird anschließend einem Adsorber 15 zugeführt, in dem Wasser und/oder Öl entfernt und ein gegenüber dem Ammoniakeinsatz 1 an Ammoniak angereichertes und an Wasser und/oder Öl abgereichertes Ammoniakgas 2 und ein gegenüber dem Ammoniakeinsatz 1 an Ammoniak abgereichertes und an Wasser und/oder Öl angereichertes Tailgas 3 erzeugt werden. Das Ammoniakgas 2 wird dem Ammoniakcracker 20 zugeführt und zu einem weitgehend aus Ammoniak, Wasserstoff und Stickstoff bestehenden Spaltgas 4 umgesetzt.

Der in Figur 1 gezeigte Adsorber 15, der insbesondere mehrere unterschiedliche Adsorptionsschichten aufweisen kann, ist ein Temperaturwechsel-Adsorber. Zu seiner Regenerierung wird ihm ein warmes Regeneriergas 6 zugeführt, das insbesondere ein Temperaturniveau von mindestens 95°C oder mindestens 100°C oder mindestens 110°C und höchstens 250°C oder höchstens 275°C oder höchstens 300°C hat. In der Ausführungsform der Figur 1 wird als Regeneriergas 6 ein Teil des im Ammoniakcracker 20 erzeugten Spaltgases 4 verwendet.

Im Ammoniakcracker 20 erfolgt die Umsetzung des Ammoniakgases 2 bei einer Temperatur von ca. 600°C mit Unterstützung eines Katalysator auf Eisenbasis. Zumindest ein Teil der für die endotherme Spaltreaktion benötigten Wärme wird durch Verfeuern von im Adsorber 15 erzeugtem Tailgas 3 bereitgestellt und dem Ammoniakcracker 20 zugeführt.

Zu seiner Aufbereitung zu einem Wasserstoff enthaltenden Produkt 5 wird das Spaltgas 4 in der Aufbereitungseinrichtung 30 beispielsweise einer Kühlfalle zugeführt, um Ammoniak durch Kondensation abzutrennen. Zur Ammoniakabtrennung kann die Aufbereitungseinrichtung 30 auch einen Druckwechsel-Adsorber aufweisen, die aber aufgrund des aus dem Ammoniakeinsatz 1 entfernten Wassers und/oder Öls neben der Kühlfalls nicht erforderlich sein sollte.

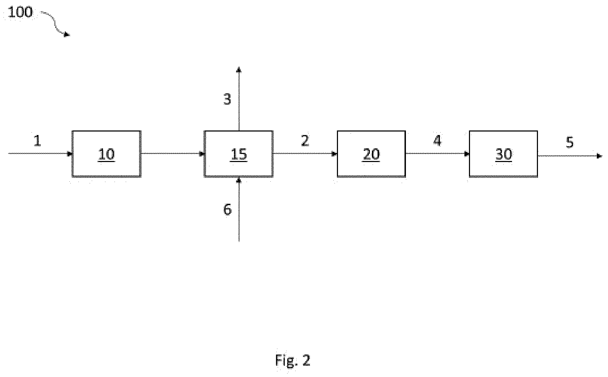

In Figur 2 ist eine weitere Ausführungsform einer Anlage 100 gemäß der vorliegenden Erfindung veranschaulicht.

Im Gegensatz zu der in Figur 1 gezeigten Ausführungsform der Anlage 100 wird der Adsorber 15, der wiederum ein Temperaturwechsel-Adsorber ist, nicht durch einen Teil des vom Ammoniakcracker 20 erzeugten Rohgases 4 regeneriert, sondern dem Temperaturwechsel-Adsorber wird ein externes Gas 6 zugeführt, bei dem es sich insbesondere um reines Stickstoffgas handelt, das zuvor auf ein Temperaturniveau von mindestens 95°C oder mindestens 100°C oder mindestens 110°C und höchstens 250°C oder höchstens 275°C oder höchstens 300°C erhitzt wurde.

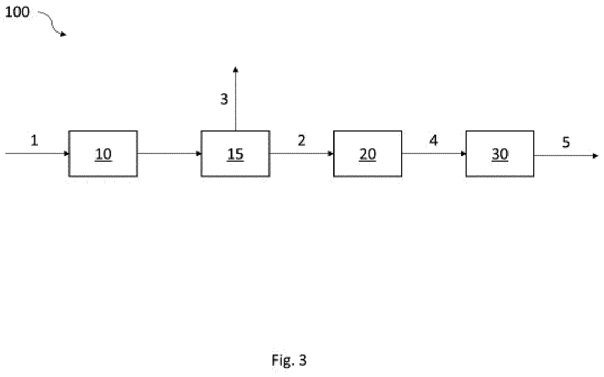

In Figur 3 ist eine weitere Ausführungsform einer Anlage 100 gemäß der vorliegenden Erfindung veranschaulicht.

Im Gegensatz zu den in den Figuren 1 und 2 gezeigten Anlagen 100 ist der Adsorber 15 in der in Figur 3 gezeigten Ausführungsform ein Druckwechsel-Adsorber. Ebenso wie durch einen Temperaturwechsel-Adsorber wird auch durch den Druckwechsel-Adsorber ein gegenüber dem Ammoniakeinsatz 1 an Ammoniak angereichertes und an Wasser und/oder Öl abgereichertes Ammoniakgas 2 und ein gegenüber dem Ammoniakeinsatz 1 an Ammoniak abgereichertes und an Wasser und/oder Öl angereichertes Tailgas 3 erzeugt.

Die Regenerierung des bei einem Absorptionsdruck zwischen 20 und 60 bar betriebenen Druckwechsel-Absorbers erfolgt durch Druckabsenkung auf höchstens 4 bar oder höchstens 2,5 bar oder höchstens 1,5 bar und Spülung mit einem kalten Regeneriergas, bei dem es sich vorzugsweise um einen Teil des Ammoniakgases 2 handelt.

Ähnlich wie bei der Verwendung des Temperaturwechsel-Adsorbers ist auch bei der Verwendung des Druckwechsel-Adsorbers kein weiterer Druckwechsel-Adsorber stromabwärts des Ammoniakcrackers 20 notwendig, um das im Spaltgas 4 verbliebene Ammoniak zu entfernen.

## Patentansprüche

1. Verfahren zur Herstellung eines Wasserstoff enthaltenden Produkts (5) aus einem Wasser und/oder Öl enthaltender Ammoniakeinsatz (1), bei dem ein Ammoniakgas (2) in einem Ammoniakcracker (20) unter Wärmezufuhr und mit katalytischer Unterstützung zu einem Ammoniak sowie Wasserstoff und Stickstoff enthaltenden Spaltgas (4) umgesetzt wird, das das Wasserstoff enthaltende Produkt (5) bildet oder zu diesem aufbereitet wird, **dadurch gekennzeichnet, dass** aus dem Ammoniakeinsatz (1) Wasser und/oder Öl entfernt werden, um das dem Ammoniakcracker (20) zuzuführende Ammoniakgas (2) zu erhalten.

2. Verfahren nach Anspruch 1, **dadurch gekennzeichnet, dass** das Ammoniakgas (2) mit Unterstützung eines eisenbasierten Katalysators umgesetzt wird.

3. Verfahren nach einem der Ansprüche 1 oder 2, **dadurch gekennzeichnet, dass** Wasser und/oder Öl aus dem Ammoniakeinsatz (1) durch Adsorption in einem Adsorber (15) und/oder über eine Membran entfernt wird, wobei das gegenüber dem Ammoniakeinsatz (1) an Ammoniak angereicherte und an Wasser und/oder Öl abgereicherte Ammoniakgas (2) und ein gegenüber dem Ammoniakeinsatz (1) an Ammoniak abgereichertes und an Wasser und/oder Öl angereichertes Tailgas (3) erzeugt werden.

4. Verfahren nach einem der Ansprüche 1 oder 2, **dadurch gekennzeichnet, dass** die Adsorption durch Druckwechsel-Adsorption (15) in einem Druckwechsel-Adsorber und/oder durch Temperaturwechsel-Adsorption in einem Temperaturwechsel-Adsorber durchgeführt wird.

5. Verfahren nach einem der Ansprüche 1 bis 4, **dadurch gekennzeichnet, dass** der Ammoniakeinsatz (1) vor der Entfernung von Wasser und/oder Öl bei einem Druck zwischen 20 und 60 bar in einer Vorbehandlungseinheit (10) verdampft und überhitzt wird.

6. Verfahren nach einem der Ansprüche 1 bis 5, **dadurch gekennzeichnet, dass** der Druckwechsel-Adsorber (15) bei einem Druck höchstens 4 bar oder höchstens 2,5 bar oder höchstens 1,5 bar regeneriert wird.

7. Verfahren nach einem der Ansprüche 1 bis 6, **dadurch gekennzeichnet, dass** zur Regenerierung des Temperaturwechsel-Adsorber Stickstoff oder ein Teil des im Ammoniakcracker (20) erzeugten Spaltgases (4) als Regeneriergas eingesetzt wird.

8. Verfahren nach Anspruch 7, **dadurch gekennzeichnet, dass** das Regeneriergas ein Temperaturniveau von mindestens 95°C oder mindestens 100°C oder mindestens 110°C und höchstens 250°C oder höchstens 275°C oder höchstens 300°C hat.

9. Verfahren nach einem der Ansprüche 1 bis 8, **dadurch gekennzeichnet, dass** ein bei der Entfernung von Wasser und/oder Öl aus dem Ammoniakeinsatz (1) erhaltenes Tailgas (3) oder ein Teil davon zur Bereitstellung zumindest eines Anteils der dem Ammoniakcracker (20) zugeführten Wärme verfeuert wird.

10. Anlage zur Herstellung eines Wasserstoff enthaltenden Produkts (5) aus einem Wasser und/oder Öl enthaltender Ammoniakeinsatz (1), aufweisend einen Ammoniakcracker (20) mit einem Katalysator, in dem ein Ammoniakgas (2) unter Wärmezufuhr und mit katalytischer Unterstützung in ein Ammoniak sowie Wasserstoff und Stickstoff enthaltendes Spaltgas (4) umgesetzt werden kann, das das Wasserstoff enthaltenden Produkt (5) bildet oder zu diesem aufbereitbar ist, **dadurch gekennzeichnet, dass** sie eine Abtrenneinrichtung (15) umfasst, mit der Wasser und/oder Öl aus dem Ammoniakeinsatz (1) entfernbar sind, um das dem Ammoniakcracker (20) zuzuführende Ammoniakgas (2) zu erhalten.

11. Anlage nach Anspruch 9, **dadurch gekennzeichnet, dass** der Ammoniakcracker (20) einen eisenbasierten Katalysator aufweist.

12. Anlage nach einem der Ansprüche 10 oder 11, **dadurch gekennzeichnet, dass** die Abtrenneinrichtung (15) einen Druckwechsel-Adsorber und/oder einen Temperaturwechsel-Adsorber und/oder eine Membraneinheit umfasst.
